# EUROPEAN PATENT SPECIFICATION

(11) **EP 2 550 127 B1**
(45) Date of publication and mention of the grant of the patent: **27.02.2019**
(21) Application number: 10717561.4
(22) Date of filing: 25.03.2010
(51) Int. Cl.: B23H 7/26, B23B 31/16

(54) **A SELF-CENTERING CLAMP FOR A CYLINDRICAL TOOL**
SELBSTZENTRIERENDE KLAMMER FÜR EIN ZYLINDERFÖRMIGES WERKZEUG
COLLIER DE SERRAGE À AUTO-CENTRAGE POUR OUTIL CYLINDRIQUE

(43) Date of publication of application: 30.01.2013
(73) Proprietor: Sarix S.A., 6592 Sant'Antonino (CH)
(72) Inventor: CORDA, Marco, CH-6596 Gordola (CH); POZZONI, Christian, CH-6670 Avegno (CH)
(74) Representative: Zardi, Marco
(86) International application number: PCT/EP2010/053934
(87) International publication number: WO 2011/116826

(56) References cited:
- DE-C- 456 492
- US-A- 1 750 023
- US-A- 2 458 824
- US-A- 5 041 709

## Description

### Field of the invention

The invention relates to a clamp for a substantially cylindrical tool of a machine tool. The inventive clamp is suitable in particular for precision rotary tools having a small diameter; a preferred field of application is the clamping of electrodes for electric discharge machining (EDM) or micro-EDM.

### Prior art

A known technique to clamp a rotary cylindrical tool is to provide a rotary chuck with two or more clamping jaws. For example, a plurality of clamping jaws are arranged radially around a clamping axis, and lock the tool by moving towards each other. The tool is actually clamped between suitable contact areas of the jaws. Said contact areas need to be relatively small, in order to ensure a proper clamping action. For example, the jaws have a tapered end portion, carrying the aforesaid contact areas, and a larger body portion.

A disadvantage of this known art is that a tool having a small diameter, compared to the clamping surfaces of the jaws, may escape between the jaws. As soon as the jaws are slightly open, the clearance between the tapered ends of the jaws may be sufficient for the tool to fall down from the chuck. Also during the locking action, i.e. while the jaws are approaching, the tool may fall or remain positioned in a wrong manner. In other words, a clamping system according to known art is not able to retain a tool with a small diameter, until the jaws are very close to the locking position. A wrong contact between the jaws and the tool may also damage the tool, for example due to excessive contact pressure. The above problems may result In machine downtime and/or loss of precision. Moreover, the larger body portions define a minimum diameter for the tools that can be clamped. A tool with a diameter less than said minimum cannot be clamped, because the clamps would interfere each other before the tool is actually secured. Hence, in the known art, a very small tool require smaller clamps which, however, may have the disadvantage of less rigidity and reduce the applicable clamping force.

This problem is felt for example in the field of electric discharge machining (EDM), where the tool is a cylindrical electrode that may have a small diameter. For example, EDM makes use of cylindrical electrodes of about 1 mm diameter or smaller; in some cases as small as 0.2 mm diameter. DE456492C discloses a device according to the preamble of claim 1.

### Summary of the invention

The technical problem underlying the invention is to adapt a clamping device in order to provide accurate centering of a cylindrical tool, even of a small diameter, and avoid the above discussed drawbacks,

The idea underlying the invention is to provide the larger body portions of the clamps with matching patterns of protrusions and recesses, so that the clamps may "intersect" each other while the device is closing.

Accordingly, the above problem is solved with a device for clamping a substantially cylindrical lool, comprising:
- a plurality of clamps arranged radially around a central axis, each clamp being displaceable in a radial direction to/from said axis;
- said clamps comprising a tapered portion with a contact area for clamping said tool, and a body portion;
- the body portions of the clamps being larger than the lapered portions, and the body portions having inner faces towards the central axis,
wherein:
- said inner faces of the body portions of the clamps have respective patterns of protrusions and recesses, the patterns being arranged in such a way that the protrusions of each clamp can be received in recesses of the other clamps upon displacement of said clamps towards said axis, characterised by a base flange supporting each of said clamps with a parallel structure, according to claim 1.

Said protrusions and recesses are preferably lying on planes perpendicular to said central axis. The protrusions are arranged on different planes or layers, so that any protrusion of a clamp matches a recess of another clamp, while the clamping device close. Preferably the protrusions are received in the recesses continuously from the open position to the close position.

In a preferred embodiment, said inner surfaces are realized as toothed surfaces. More preferably, a plurality of teeth is distributed over the inner surface of body portions of the clamps, so that the teeth form said protrusions and spaces between consecutive teeth form said recesses; the sets of teeth of the clamps are suitably staggered, so that any tooth of a clamp matches a recess of other clamps, while the device close and the clamps are approaching each other. The toothed surface in other words may freely intersect each other, without interfere, while the clamps are closing against each other.

Said teeth and recesses can be realized by cuts on the inner surfaces of body portions of the clamps. The teeth and recesses may be for example machined on the clamps.

It can be understood that the matching patterns of protrusions and recesses allow the body portions of the clamps to intersect each other, when the device is closing, Hence, the clamps are able to keep the tool in a small area central area around the axis, preventing the tool from falling outside.

In more preferred embodiments, the device has three clamping elements arranged at 120° around the central axis.

The device comprises a base flange that supports the clamps, and each clamp is supported by the flange with a parallel structure, adapted to allow the clamp to translate without rotating to/from the clamping position. In this way, a better contact between the clamping area and the tool is assured, as well as more precise matching between the protrusions and recesses. In a preferred embodiment, said parallel structure is formed by two parallel and flexible support elements having two points of deflection, preferably at an upper end close to the clamp, and at a lower end close to the base flange. In a more preferred embodiment, the parallel structure comprises blade-like flexible connections between the body portion of each clamp and said base flange.

A more preferred embodiment provides that said device is realized as a single-piece. For example, the flange, the clamps with the pattern of protrusions and recesses, and said flexible connections are Integrally formed in single piece. In one embodiment, a metal piece is machined to form said flange, the clamps and the flexible connections. The piece can be machined with conventional techniques or EDM techniques, or a combination thereof.

According to some embodiments, the body portions of the clamps are larger than the tapered portions perpendicularly to the aforesaid radial directions.

A further aspect of the invention is a self-centering rotary head for a machine tool, the head comprising a device according to any of the above disclosed embodiments. The term of rotary head is used to mean any rotary unit or spindle adapted to carry a tool of a machine tool. A preferred but not exclusive application is to EDM machines. Hence, one of the applications of the invention provides a self-centering head for an EDM machine, with a device for clamping an electrode according to any of the disclosed embodiments. Other applications for exemplificative purpose include conventional machine tools such as a milling machine or a drilling machine.

The advantage of keeping the tool between the clamps is particularly important when the tool is small compared to the clamps. This is the case for example of small electrodes for EDM, but the same advantages are reached with conventional tools. Another advantage is that the clamps can be realized with a massive and rigid body portion, and a smaller tapered portion carrying the contact surface for the tool.

The parallel structure allows the clamps, and in particular the clamping areas thereof, to remain parallel to the central axis while approaching the tool. The clamping force is better distributed on the surface of the tool thus resulting in a safer and more reliable clamping action. The realization in a single piece of the main components such as clamps, flange and flexible connections, allows to obtain a better rigidity and more precise tolerances.

The features and the advantages of the invention shall become clearer from the following detailed description and with the help of the attached figures.

### Description of the figures

Fig. 1 is a perspective view tool-carrying head of an EDM machine according to an embodiment of the present invention.
Fig. 2 is a view of a clamping device of the head of Fig. 1, according to a preferred embodiment of the invention.
Fig. 3 is another view of the device of Fig. 2, showing the clamping elements in open position.
Fig. 4 is a close-up detail of the device of Fig. 2.
Fig. 5 is a front view of the clamping elements of the device of Fig. 2.
Fig. 6 is a sequence showing the clamping elements of the device of Fig. 2, while they close around the smallest applicable tool in the particular embodiment of the figure.
Fig. 7 shows an EDM machine comprising the head of Fig. 1.

### Detailed description of preferred embodiments

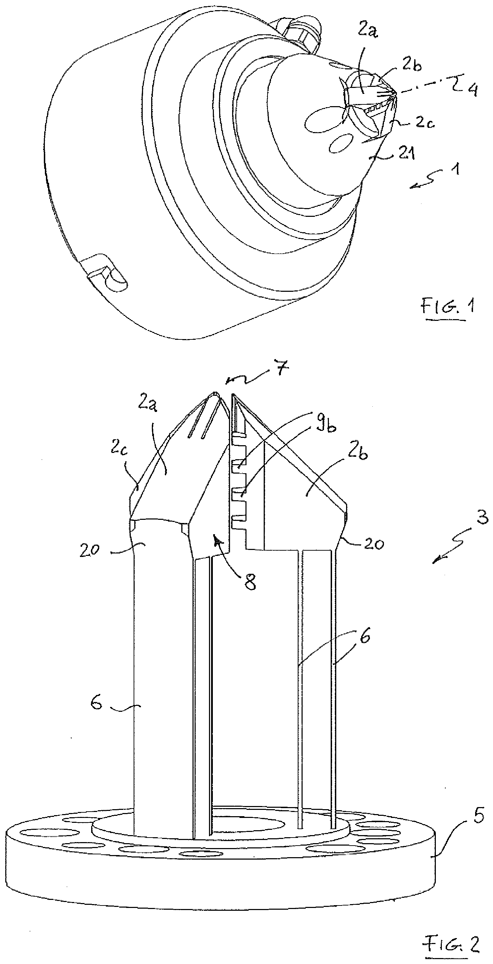

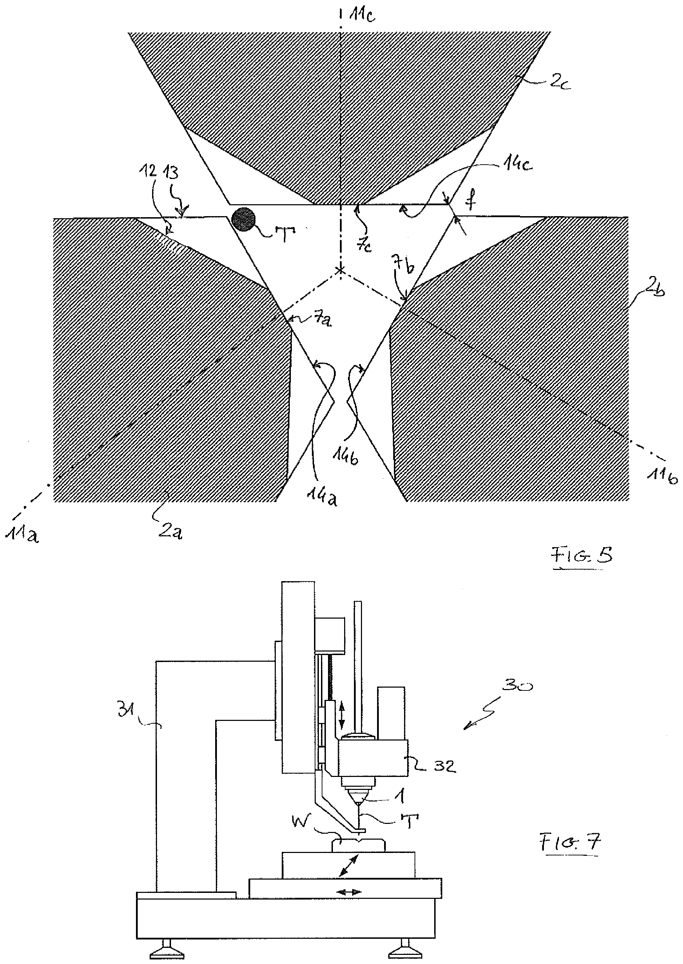

Fig. 1 shows a tool-carrying rotary head 1 suitable for an EDM machine. The head 1 is suitable to receive a tool such as a cylindrical electrode T (shown in Figs. 5 to 7). In use, the head 1 rotates with the tool T.

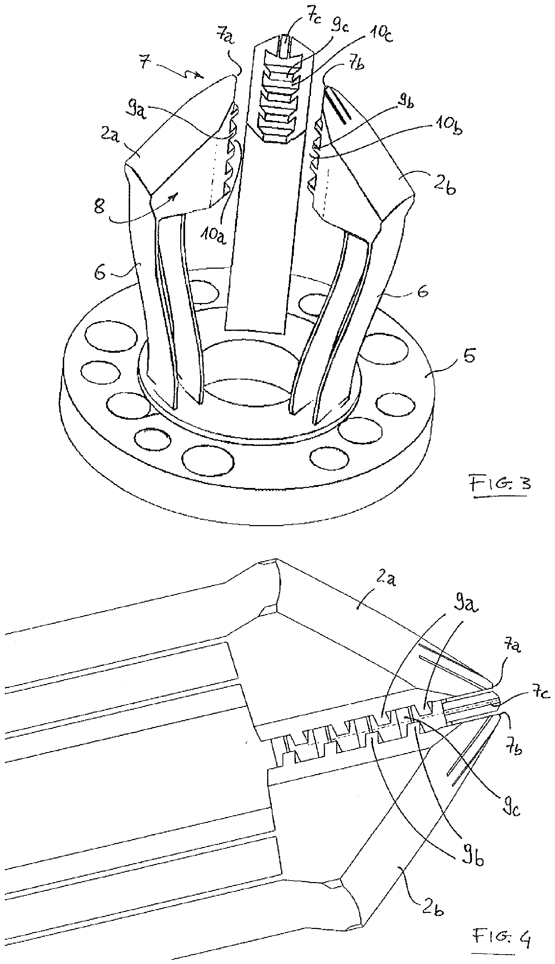

The electrode is received at the tip of said head 1, between clamps 2a, 2b and 2c which are part of a clamping device 3 as shown in Figs. 2 and 3. The clamps 2a, 2b and 2c are radially arranged around a central axis 4 which is also the axis of the electrode, when mounted on the head 1. The clamps are displaceable in radial directions to/from the axis 4, so that they can firmly clamp or release the electrode on said axis 4.

Each of said clamps 2a, 2b and 2c is connected to a base flange 5 by two flexible connections, made by parallel blades 6. The base flange 5, the clamps 2a to 2c and the blades 6 are preferably machined from a single metal piece, i.e. the device 3 of Figs. 2 and 3 is preferably a single piece.

The clamps 2a to 2c (Figs. 3 to 5) have tapered portions 7 with respective contact areas 7a, 7b and 7c for the electrode, and body portions 8. Fig. 3 for example indicates the tapered portion 7 and body portion 8 of the clamp 2a.

Each clamp 2a to 2c has an inner face, directed towards the axis 4, with a respective set of teeth 9a to 9c. The teeth of each set are regularly spaced on the inner surfaces of the respective clamp 2a, 2b or 2c, so that the spaces between consecutive teeth form a plurality of recesses. Hence, a recess 10a can be recognized between two of teeth 9a of the clamp 2a; in the same manner, recesses 10b and 10c can be recognized between teeth 9b and 9c of the other two clamps.

The toothed, inner surfaces of clamps 2a to 2c are arranged to match each other. More in detail, the sets of teeth 9a, 9b and 9c are staggered in the direction of the axis 4, so that the clamps have matching patterns of teeth/recesses, the teeth of each clamp being received in the recesses of the other clamps while the device 3 is closing. Referring to the exemplificative embodiment of the figures, it can be seen from Fig. 4 that a tooth 9b and a tooth 9c are received in a recess 10a between two of the teeth 9a; similarly, a couple of teeth 9a and 9c are received in a recess 10b between two teeth 9b, and so on.

Said teeth and recesses can be realized substantially by cuts on the inner surfaces of body portions of the clamps. For example, the clamps are machined to form the recesses 10a to 10c, thus forming also the teeth 9a to 9c.

Referring now to Fig. 5, it can be appreciated how the body portions 8 are larger than tapered portions 6 in directions perpendicular to the clamping directions. For example, Fig. 5 shows the clamping directions 11a, 11b and 11c of the clamps 2a to 2c, which are perpendicular to the axis 4. Perpendicularly to said directions 11a to 11c, the body portions 8 of the clamps are larger than the upper tapered portions 7. In Fig. 5, the inclined faces 12 of tapered portion 7 of clamp 2a are shown, as well as sides 13 of the underlying, larger body portion 8 and trace 14a of the plane of front surfaces of teeth 9a.

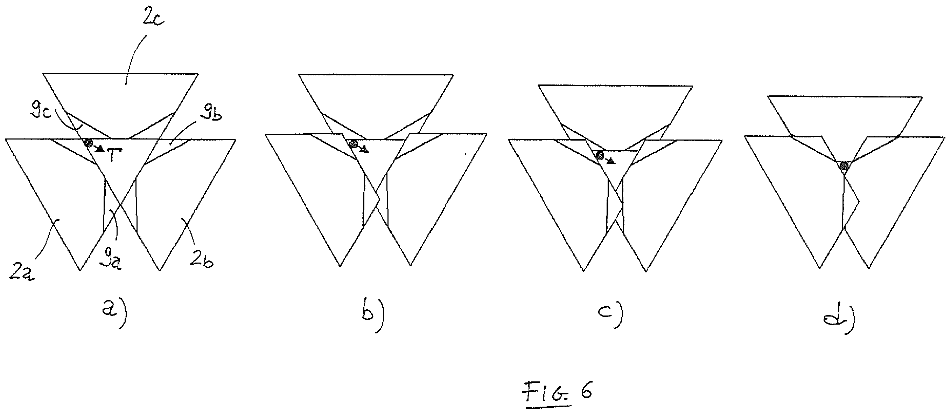

The trace 14a appear to intersect with the traces 14b, 14c of planes of the front surfaces of the teeth of the other two clamps, due to the layered arrangement of the teeth 9a to 9c, and due to the fact that the teeth of one clamp are actually accommodated in recesses of other clamps. This effect is shown in the sequence a) to d) of Fig. 6.

Looking in greater detail to Fig. 6, the position a) shows the teeth 9a - 9c that start intersect each other. In positions b) and c), the clamping elements are further approaching and the space between the clamps is becoming smaller, thus self-centering the tool T. The arrangement on parallel planes of the teeth 9a - 9c can be appreciated in positions b) and c) showing for example a tooth 9a being above a tooth 9b, and the tooth 9b being above the tooth 9c. Position d) is the clamping position with contact areas 7a to 7c in contact with the tool T.

It should be noted, in particular, that in intermediate positions such as a) or b), the distance between the contact areas 7a - 7c is greater than the diameter of the tool T and hence the tool T would be free to escape between the clamping elements, without the retaining action of the inventive teeth 9a-9c. Also in Fig. 5 it can be appreciated that the distance f between the edges of teeth of two clamps is smaller than the diameter of the tool T and, hence, the tool cannot escape the substantially triangular area (in the sectional view of Fig. 5) between the clamps.

Fig. 7 shows the smallest tool T compatible with the particular embodiment of clamping device 3. Larger tools T of course can be used with the same clamping device, the invention being not limited to a particular range of tool size.

Turning back to Figs. 1 and 2, the clamping elements 2a - 2c may be operated by a wedge-like coupling between inclined surfaces 20 and corresponding surfaces of a jacket 21. Operation may be for example pneumatic. In a preferred embodiment, the clamping elements are normally closed under the force of suitable springs mounted inside the head 1, and are opened by feeding compressed air to a suitable opening piston. These details however are not essential for the invention, and are not described further.

A further feature of the invention can be appreciated from Figs. 2 and 3.

The flexible blades 6 between clamping elements 2a - 2c and the base flange operate as a parallel structure, i.e. the contact areas 7a to 7c remain substantially parallel each other, when the clamping elements open. Fig. 3 shows the blades 6 assuming an S-like deformed shape, that keeps the clamps 2a to 2c and contact areas 7a to 7c parallel to axis 4, with no rotation of the clamps. The advantage is that the clamping of tool T is more accurate and contact pressure on the tool is uniformly distributed.

The blades 6 are realized to be flexible. In one embodiment for example the blades 6 are thin enough to be deformed to the S-like shape of Fig. 3; in equivalent embodiments the blades 6 are replaced with supporting elements having selected thin parts, preferably at the upper and lower ends. Deflection is concentrated in said thin parts, which act substantially as "hinges" to allow a deformation similar to that of Fig. 3.

Fig. 7 shows a preferred application of the head 1 as part of an EDM machine 30, comprising a frame 31 and a rotation unit 32 to rotate the tool T acting on a workpiece W. The application to EDM machines is preferred, but shall not be intended as a limitation. The invention is applicable to any kind of substantially cylindrical tools and related machines with the aforesaid advantages.

## Claims

1. A device (3) for clamping a substantially cylindrical tool, comprising:
- a plurality of clamps (2a - 2c) arranged radially around a central axis (4), each clamp being displaceable in a radial direction to/from said axis;
- said clamps comprising a tapered portion (7) with a contact area (7a - 7c) for clamping said tool, and a body portion (8);
- the body portions of the clamps being larger than the tapered portions, and the body portions having inner faces towards said central axis,
wherein:
- said inner faces of the body portions of the clamps have respective patterns of protrusions (9a - 9c) and recesses (10a - 10c), the patterns being arranged in such a way that the protrusions of each clamp (9a) can be received in recesses (10b, 10c) of the other clamps upon displacement of said clamps towards said axis,
**characterized by** comprising a base flange (5), said base flange (5) supporting each of said clamps (2a - 2c) with a parallel structure, said parallel structure being able to allow the clamp to translate without rotating to/from the clamping position.

2. A device according to claim 1, said protrusions and recesses lying on planes perpendicular to said central axis.

3. A device according to claim 2, said inner faces being realized as toothed surfaces.

4. A device according to claim 3, a plurality of teeth (9a - 9c) being distributed over the inner surfaces of body portions (8) of the clamps, so that the teeth (9a - 9c) form said protrusions and spaces between consecutive teeth form said recesses (10a - 10c), the sets of teeth of the clamps being suitably staggered, so that any tooth (9a) of a clamp matches a recess (10b, 10c) of other clamps, while the device close.

5. A device according to claim 3 or 4, said teeth and recesses being realized by cuts on the inner faces of body portions of the clamps.

6. A device according to any of the preceding claims, the device having three clamping elements (2a, 2b, 2c) arranged at 120° around the central axis.

7. A device according to claim 1, the clamps being connected to the base flange by two parallel flexible supports (6) forming said parallel structure.

8. A device according to claim 7, wherein at least said clamps (2a - 2c), said flange (5) and said flexible supports (6) are realized in a single piece

9. A self-centering tool-carrying head (1) for a machine tool, the head (1) comprising a device (3) for clamping a tool (T) according to any of the previous claims.

10. A machine tool comprising a self-centering head (1) according to claim 9.

11. A machine tool according to claim 10, the machine tool being an EDM machine (30).

12. A machine tool according to claim 10, the machine tool being a milling machine or a drilling machine.

## Patentansprüche

1. Eine Vorrichtung (3) zum Festklemmen eines im Wesentlichen zylindrischen Werkzeugs, umfassend:
- mehrere radial um eine zentrale Achse angeordnete Klemmen (2a - 2c) (4), wobei jede Klemme in radialer Richtung zu/von dieser Achse verschiebbar ist;
- wobei diese Klemmen einen verjüngten Abschnitt (7) mit einem Anlagebereich (7a - 7c) zum Spannen des Werkzeugs und einen Körperabschnitt (8) aufweisen;
- die Körperabschnitte der Klemmen sind grösser als die verjüngten Abschnitte und die Körperabschnitte weisen Innenflächen auf, die zur zentralen Achse weisen,
wobei:
- diese Innenflächen der Körperabschnitte der Klemmen jeweilige Muster von Vorsprüngen auf (9a - 9c) und Ausnehmungen (10a - 10c) aufweisen, wobei die Muster derart angeordnet sind, dass die Vorsprünge jeder Klemme (9a) in Ausnehmungen (10b, 10c) der anderen Klemmen bei Verschiebung dieser Klemmen in Richtung auf die genannte Achse aufnehmbar sind,
**dadurch gekennzeichnet, dass** sie einen Basisflansch (5) umfasst, wobei dieser Basisflansch (5) jede der genannten Klemmen (2a - 2c) mit einer Parallelstruktur trägt, wobei diese Parallelstruktur in der Lage ist, der Klemme zu ermöglichen, sich ohne Drehung in die/aus der Klemmposition zu verschieben.

2. Eine Vorrichtung nach Anspruch 1, wobei die genannten Vorsprünge und Ausnehmungen auf Ebenen senkrecht zu der zentralen Achse liegen.

3. Eine Vorrichtung nach Anspruch 2, wobei die genannten Innenflächen als gezahnte Flächen ausgebildet sind.

4. Eine Vorrichtung nach Anspruch 3, wobei eine Vielzahl von Zähnen (9a - 9c) über die Innenflächen von Körperabschnitten (8) der Klemmen verteilt ist, so dass die Zähne (9a - 9c) die genannten Vorsprünge und die Zwischenräume zwischen aufeinanderfolgenden Zähnen die genannten Ausnehmungen (10a - 10c) bilden, wobei die Sätze von Zähnen der Klemmen entsprechend versetzt sind, so dass jeder Zahn (9a) einer Klemme einer Ausnehmung (10b, 10c) von anderen Klemmen entspricht, während sich die Vorrichtung schließt.

5. Eine Vorrichtung nach Anspruch 3 oder 4, wobei die Zähne und Ausnehmungen durch Schnitte an den Innenflächen von Körperabschnitten der Klemmen realisiert sind.

6. Eine Vorrichtung nach einem der vorstehenden Ansprüche, wobei die Vorrichtung drei Klemmelemente (2a, 2b, 2c) aufweist, die in 120° um die zentrale Achse herum angeordnet sind.

7. Eine Vorrichtung nach Anspruch 1, wobei die Klemmen mit dem Basisflansch durch zwei parallele flexible Halterungen (6), die die genannte Parallelstruktur bilden, verbunden sind.

8. Eine Vorrichtung nach Anspruch 7, wobei mindestens die genannten Klemmen (2a - 2c), der genannte Flansch (5) und die genannten flexiblen Halterungen (6) in einem Stück realisiert sind.

9. Ein selbstzentrierender Werkzeugträgerkopf (1) für eine Werkzeugmaschine, wobei der Kopf (1) eine Vorrichtung (3) zum Spannen eines Werkzeugs (T) gemäß einem der vorhergehenden Ansprüche umfasst.

10. Eine Werkzeugmaschine mit einem selbstzentrierenden Kopf (1) nach Anspruch 9.

11. Eine Werkzeugmaschine nach Anspruch 10, wobei die Werkzeugmaschine eine Funkenerodiermaschine (30) ist.

12. Eine Werkzeugmaschine nach Anspruch 10, wobei die Werkzeugmaschine eine Fräsmaschine oder eine Bohrmaschine ist.

## Revendications

1. Dispositif (3) pour serrer un outil essentiellement cylindrique, comprenant :
- une pluralité de pinces (2a-2c) disposées radialement autour d'un axe central (4), chaque pince étant déplaçable dans une direction radiale vers/à l'écart du dit axe,
- les dites pinces comprenant une partie biseautée (7) avec une zone de contact (7a-7c) pour serrer le dit outil, et une partie de corps (8),
- les parties de corps des pinces étant plus grandes que les parties biseautées et les parties de corps présentant des faces internes vers le dit axe central,
- où :
- les dites faces internes des parties de corps des pinces ont des motifs respectifs de protubérances (9a-9c) et de creux (10a-10c), les motifs étant disposés de manière telle que les protubérances de chaque pince (9a) puissent être reçues dans les creux (10b, 10c) des autres pinces en cas de déplacement des dites pinces en direction du dit axe,
- **caractérisé en ce qu'**il comprend une collerette de base (5), la dite collerette de base (5) supportant chacune des dites pinces (2a-2c) avec une structure parallèle, la dite structure parallèle étant capable de permettre à la pince de translater sans pivoter vers/à l'écart de la position de serrage.

2. Dispositif selon la revendication 1, les dits protubérances et creux se trouvant sur des plans perpendiculaires au dit axe central.

3. Dispositif selon la revendication 2, les dites faces internes étant réalisées comme des surfaces dentées.

4. Dispositif selon la revendication 3, une pluralité de dents (9a-9c) étant distribuées sur les surfaces internes des parties de corps (8) des pinces, de manière à ce que les dents (9a-9c) forment les dites protubérances et les espaces entre les dents consécutives forment les dits creux (10a-10c), les jeux de dents des pinces étant répartis de manière appropriée, si bien que toute dent (9a) d'une pince corresponde à un creux (10b, 10c) d'autres pinces quand le dispositif se ferme.

5. Dispositif selon la revendication 3 ou 4, les dites dents et creux étant réalisés par des découpes sur les faces internes des parties de corps des pinces.

6. Dispositif selon l'une quelconque des revendications précédentes, le dispositif présentant trois éléments de serrage (2a, 2b, 2c) placés à 120° autour de l'axe central.

7. Dispositif selon la revendication 1, les pinces étant connectées à la collerette de base par deux supports flexibles parallèles (6) formant la dite structure parallèle.

8. Dispositif selon la revendication 7, **caractérisé en ce qu'**au moins les dites pinces (2a-2c), la dite collerette (5) et les dits supports flexibles (6) sont réalisés en une pièce unique.

9. Tête portant un outil d'auto-centrage (1) pour une machine-outil, la tête (1) comprenant un dispositif (3) pour serrer un outil (T) selon l'une quelconque des revendications précédentes.

10. Outil d'usinage comprenant une tête à auto-centrage (1) selon la revendication 9.

11. Machine-outil selon la revendication 10, la machine-outil étant une machine à électroérosion (30).

12. Machine-outil selon la revendication 10, la machine-outil étant une fraiseuse ou une perceuse.
